# FASCICULE DE BREVET EUROPEEN

(11) **EP 1 990 275 B1**
(45) Date de publication et mention de la délivrance du brevet: **20.04.2011**
(21) Numéro de dépôt: 07108063.4
(22) Date de dépôt: 11.05.2007
(51) Int. Cl.: B64C 27/08, B64C 27/10, B64C 27/16, B64C 27/18

(54) **Rotor d'hélicoptère contrarotatif coaxial**
Gegenläufiger koaxialer Hubschrauberrotor
Coaxial contrarotating helicopter rotor

(43) Date de publication de la demande: 12.11.2008
(73) Titulaire: Antoine, Hubert, 4130 Esneux (BE)
(72) Inventeur: Antoine, Hubert, 4130 Esneux (BE)
(74) Mandataire: Lerho, Marc J. A.

(56) Documents cités:
- DE-A1- 3 906 109
- FR-A1- 2 532 273
- GB-A- 2 376 928
- US-A- 3 417 825
- US-A- 4 589 611

## Description

La présente invention concerne un rotor sustentateur d'hélicoptère ou d'autogire entraîné par un débit d'air ou de gaz sous pression.

Dans le type de rotor dit thermopropulsé, la force d'entraînement du rotor est créée par la détente et l'éjection de gaz sous pression et non pas par un dispositif mécanique lié au fuselage de l'appareil. De la sorte, il n'y a pas de couple de rotation à reprendre au niveau du fuselage et le traditionnel rotor de queue n'est pas nécessaire.

De tels dispositifs ont été utilisés, notamment sur l'hélicoptère convertible SO-1310, sur le convertible Mc Donnell XV-1, sur l'hélicoptère Sud Aviation Djinn, sur le projet SA-350 Sud Aviation Rotojet, et sur le Fairey « Rotodyne ». Sur tous ces appareils, l'air sous pression est éjecté soit en bout de pale, soit à mi-pale. Certains de ces appareils dits convertibles prévoient une transition entre le vol « hélicoptère » et le vol « autogire ». Dans le vol « autogire », le rotor n'est plus alimenté en air sous pression, et tourne sous l'effet du vent relatif créé par l'avancement de l'aéronef. La propulsion de l'aéronef est dans ce cas assurée par une hélice ou une réacteur.
Les avantages apportés par ce type de rotor sont l'élimination du réducteur d'entraînement du rotor, l'élimination du rotor de queue et donc une simplification et une plus grande fiabilité de l'appareil. De plus les rotors de queue sont une source majeure d'accidents.
Tout en ayant ces avantages, les rotors thermopropulsés présentent aussi des inconvénients qui en ont limité l'emploi. Par exemple, le conduit d'amenée de l'air sous pression passe dans la pale : sa section est donc limitée, ce qui crée des pertes de charge. En outre, la vitesse d'éjection de l'air nécessaire à la poussée sur la pale présente une énergie cinétique dissipée dans le jet d'air, et donc perdue, ce qui diminue aussi le rendement et constitue une source importante de bruit.

En outre, on connaît des aéronefs à rotors contrarotatifs. Un tel aéronef est connu de US-A-3,417,825 qui est considéré comme l'art antérieur le plus proche.

L'invention a pour but d'augmenter le rendement des rotors thermopropulsés, tout en diminuant leur niveau de bruit.

Dans l'invention telle que décrite par les caractéristiques de la revendication 1, ce but est atteint en prévoyant deux rotors contrarotatifs coaxiaux entraînés chacun par un ou plusieurs étages de turbine contrarotative. Ces étages sont disposés à la périphérie de deux coupoles contrarotatives portant et entraînant chacune un jeu de pales de sustentation. Ces coupoles formant une chambre centrale de forme lenticulaire alimentée en son centre en air ou gaz sous pression fourni par un compresseur ou un réacteur. L'air ou le gaz sous pression sortent radialement par les étages de turbine. Les turbines contrarotatives permettent de développer la puissance nécessaire à l'entraînement de chaque rotor sans créer de couple de rotation sur le fuselage. Le couple de réaction de chaque turbine est repris par l'autre.

Un rotor thermopropulsé conçu conformément à l'invention présente un certain nombre d'avantages.
Les turbines contrarotatives développent la puissance nécessaire à l'entraînement des deux rotors avec un bon rendement grâce à une faible vitesse périphérique de la turbine et donc une faible vitesse de sortie de l'air ou du gaz. En effet, le diamètre de la turbine étant beaucoup plus réduit que celui du rotor sustentateur, les vitesses périphériques le sont donc dans la même proportion. La vitesse radiale de sortie de l'air est faible, pour s'accorder avec les faibles vitesses périphériques de la turbine. La grande section de passage à l'intérieur de la chambre lenticulaire se prête bien aux grands débits et faibles vitesses. Le niveau de bruit est ainsi aussi réduit. Pour fonctionner à une faible vitesse périphérique, la turbine doit être alimentée par un grand débit d'air ou de gaz sous faible pression, typiquement 0,2 à 0,4 bar relatif.
Vu que le couple d'entraînement d'un rotor est repris par l'autre, il n'est donc plus nécessaire d'éjecter de l'air ou du gaz avec un fort moment angulaire, c'est-à-dire une forte vitesse tangentielle pour créer le couple d'entraînement des pales. L'air ou le gaz peut sortir de la turbine sans vitesse tangentielle appréciable. On a donc un bon rendement et un fonctionnement silencieux. A diamètre de rotor égal, ce rotor thermopropulsé a le même rendement qu'un rotor à entraînement mécanique.
Le générateur d'air ou de gaz à grand débit et faible pression, qui alimente le rotor peut également servir à la propulsion de l'aéronef en mode autogire avec un bon rendement propulsif. Dans ce cas, un système de vannes coupe l'alimentation de la chambre lenticulaire et l'air ou le gaz sont éjectés vers l'arrière de l'appareil pour créer la poussée propulsive.
Les pales ne devant pas servir de conduit de passage de l'air peuvent être plus fines et avoir une section optimisée pour le rendement aérodynamique.
Les rotors sont contrarotatifs c'est-à-dire qu'ils tournent en sens opposé et à vitesse angulaire égale : les moments gyroscopiques créés par les deux rotors s'annulent ce qui simplifie le pilotage de l'hélicoptère.
Dans le cas de vol d'avancement à grande vitesse, le décrochage aérodynamique de la pale reculante n'est plus à craindre, car il est compensé par la portance de la pale avançante de l'autre rotor : on a donc une pale avançante de part et d'autre de l'aéronef, ce qui équilibre la portance et permet le vol à haute vitesse.
La figure 1 est une vue en coupe longitudinale médiane de l'aéronef muni du rotor contrarotatif conforme à l'invention.
La figure 2 est une coupe longitudinal médiane du rotor contrarotatif conforme à l'invention, avec un seul étage de turbine par rotor représenté pour ne pas alourdir la figure.

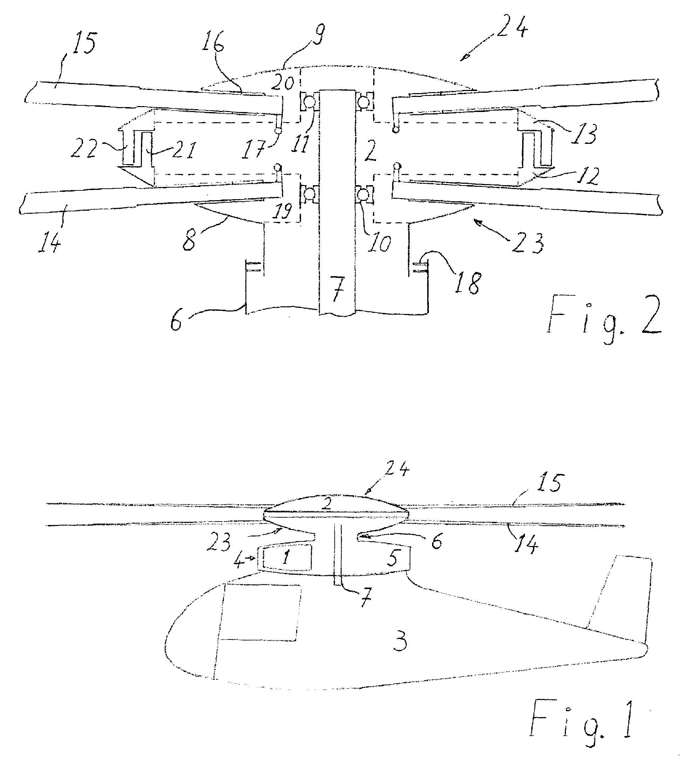

La figure 1 représente la chambre lenticulaire 2 du rotor contrarotatif 23, 24 entraînant les pales 14, et 15 en sens opposés. Le fuselage 3 de l'aéronef reçoit la portance du rotor par le mât 7 et supporte le moteur générateur d'air ou de gaz sous pression 1.

L'air alimente le générateur 1 par le passage 4 et l'air ou le gaz sous pression issus du générateur 1 soit alimentent le rotor par le conduit 6 soit sont éjectés vers l'arrière via la tuyère 5.
Comme indiqué dans la figure 2, le flux d'air ou de gaz sous pression pénètre dans la chambre 2 par le conduit 6 et passe dans les turbines 12 et 13 solidaires des rotors 23 et 24.
Les turbines sont munies d'aubages 21 et 22.
La chambre 2 est délimitée par les coupoles 8 et 9 solidaires des rotors 23 et 24.
La coupole 8 est ouverte en son centre pour recevoir le conduit 6, l'étanchéité entre la partie fixe de 6 et la partie tournante de 8 est assurée par le joint 18.
Le rotor 23 tourne sur un palier 10 autour du mât central 7. Ce mât central 7 reçoit les forces de portance des pales 14, et 15 attachées aux rotors 23 et 24 via les paliers 10 et 11 et les transmet au fuselage 3 de l'appareil.
Les voiles 19 assurent la liaison entre la coupole 8, la turbine 12 et le palier 10 sans entraver le passage de l'air ou du gaz sous pression vers les turbines.
La coupole 8 entraînée par la turbine 12 porte le jeu de pales 14.
Le rotor 24 tourne sur un palier 11 autour du mât central 7.
Les voiles 20 assurent la liaison entre la coupole 9, la turbine 13 et le palier 11.
La coupole 9 entraînée en rotation par la turbine 13 porte le jeu de pales 15.
Chaque pale 14, 15 est guidée et retenue dans son rotor par un système de paliers 16 et possède à son extrémité un levier de commande de pas 17. Ce levier est relié aux commandes de pas cyclique et pas général classiques d'un hélicoptère.

## Revendications

1. Voilure tournante d'hélicoptère ou d'autogire comprenant deux rotors contrarotatifs, un premier rotor (23), auquel sont fixés un ou plusieurs étages d'une première turbine (12) et un premier jeu de pales (14) et un second rotor (24), auquel sont fixés un ou plusieurs étages d'une seconde turbine (13) et un second jeu de pales (15), lesdits rotors (23, 24) sont entraînés par leurs turbines respectives (12, 13) lorsqu'elles sont alimentées en air ou gaz sous pression, **caractérisée en ce que** les deux rotors (23, 24) sont solidaires de deux coupoles rotatives (8, 9) délimitant une chambre lenticulaire (2), dans laquelle l'air ou le gaz sous pression peut pénétrer avant de passer dans les turbines (12, 13) solidaires de leurs rotors respectifs (23, 24).

2. Voilure tournante selon la revendication 1, **caractérisée en ce qu'**elle comporte un mât central fixe (7) apte à être lié au fuselage de l'appareil (3), destiné à recevoir les forces de portance des pales (14, 15) attachées aux rotors (23, 24) via des paliers respectifs (10, 11) et à les transmettre audit fuselage (3).

3. Voilure tournante selon la revendication 1 ou 2, **caractérisée en ce que** la coupole tournante inférieure (8) est ouverte en son centre pour recevoir un conduit fixe (6) d'acheminement de l'air ou du gaz sous pression, l'étanchéité entre le conduit (6) et ladite coupole (8) étant assurée par un joint (18).

4. Voilure tournante selon l'une quelconque des revendications 1 à 3, **caractérisée en ce qu'**il comprend des voiles (19, 20) assurant respectivement la liaison entre chaque coupole (8, 9), sa turbine (12, 13) et son palier (10, 11) respectifs, les voiles (19) relatifs à la coupole inférieure (8) étant configurés pour ne pas entraver le passage de l'air ou du gaz sous pression vers les turbines.

5. Voilure tournante selon l'une quelconque des revendications précédentes, **caractérisée en ce que** les turbines (12, 13) sont configurées pour faire tourner les rotors (23, 24) en sens opposé.

6. Voilure tournante selon l'une quelconque des revendications précédentes, **caractérisée en ce que** chaque pale (14, 15) est guidée et retenue dans son rotor par un système de paliers (16) et possède à une extrémité un levier de commande de pas (17).

7. Voilure tournante selon l'une quelconque des revendications précédentes, **caractérisée en ce que** le mât central (7) est coaxial avec le conduit fixe (6) d'acheminement de l'air ou du gaz sous pression.

8. Aéronef muni d'une voilure tournante selon l'une quelconque des revendications précédentes.

9. Aéronef selon la revendication 8, **caractérisé en ce qu'**il comprend un générateur (1) solidaire du fuselage (3) fournissant l'air ou le gaz sous pression à la chambre lenticulaire (2).

10. Aéronef selon la revendication 9, **caractérisé en ce qu'**il comprend un système de vannes pour couper l'alimentation de la chambre lenticulaire (2) et permettre l'éjection de l'air ou du gaz sous pression vers l'arrière via une tuyère (5), lorsque la propulsion de l'aéronef est en mode autogire.

11. Aéronef selon l'une quelconque des revendications 8 à 10, **caractérisé en ce que** l'aéronef est un hélicoptère ou un autogire.

## Claims

1. Rotary wing of a helicopter or gyroplane, comprising two contra-rotating rotors, a first rotor (23), to which one or more stages of a first turbine (12) and a first set of blades (14) are fixed, and a second rotor (24), to which one or more stages of a second turbine (13) and a second set of blades (15) are fixed, said rotors (23, 24) being driven by their respective turbines (12, 13) when they are supplied with pressurised air or gas, **characterised in that** the two rotors (23, 24) are connected to two rotating cupolas (8, 9) delimiting a lenticular chamber (2), into which the pressurised air or gas can penetrate before passing into the turbines (12, 13) connected to their respective rotors (23, 24).

2. Rotary wing according to claim 1, **characterised in that** it comprises a stationary central mast (7) which is able to be connected to the fuselage of the device (3), intended to receive the lift forces of the blades (14, 15) attached to the rotors (23, 24) via respective bearings (10, 11) and to transmit these forces to said fuselage (3).

3. Rotary wing according to claim 1 or 2, **characterised in that** the lower rotary cupola (8) is open at its centre so as to receive a stationary pressurised air or gas flow conduit (6), the sealing between the conduit (6) and said cupola (8) being provided by a seal (18).

4. Rotary wing according to any one of claims 1 to 3, **characterised in that** it comprises webs (19, 20) which respectively provide the connection between each cupola (8, 9), its turbine (12, 13) and its bearing (10, 11), the webs (19) relating to the lower cupola (8) being configured so as not to hinder the passage of pressurised air or gas to the turbines.

5. Rotary wing according to any one of the preceding claims, **characterised in that** the turbines (12, 13) are configured so as to make the rotors (23, 24) rotate in opposite directions.

6. Rotary wing according to any one of the preceding claims, **characterised in that** each blade (14, 15) is guided and held in its rotor by a system of bearings (16) and has a pitch control lever (17) at one end.

7. Rotary wing according to any one of the preceding claims, **characterised in that** the central mast (7) is coaxial with the stationary pressurised air or gas flow conduit (6).

8. Aircraft equipped with a rotary wing according to any one of the preceding claims.

9. Aircraft according to claim 8, **characterised in that** it comprises a generator (1) connected to the fuselage (3) and supplying the pressurised air or gas to the lenticular chamber (2).

10. Aircraft according to claim 9, **characterised in that** it comprises a system of valves for shutting off the supply to the lenticular chamber (2) and for allowing the pressurised air or gas to be discharged rearwards via a nozzle (5) when the propulsion of the aircraft is in gyroplane mode.

11. Aircraft according to any one of claims 8 to 10, **characterised in that** the aircraft is a helicopter or a gyroplane.

## Patentansprüche

1. Drehende Tragfläche eines Hubschraubers oder Tragschraubers, die zwei gegenläufig rotierende Rotoren umfasst, einen ersten Rotor (23), an dem eine oder mehrere Etagen einer ersten Turbine (12) und ein erster Satz Rotorblätter (14) befestigt sind und einen zweiten Rotor (24), an dem eine oder mehrere Etagen einer zweiten Turbine (13) und ein zweiter Satz Rotorblätter (15) befestigt sind, wobei die Rotoren (23, 24) von ihren jeweiligen Turbinen (12, 13) angetrieben werden, wenn sie mit Luft oder Druckgas versorgt werden, **dadurch gekennzeichnet, dass** die zwei Rotoren (23, 24) mit zwei Rotationskuppeln (8, 9) verbunden sind, die eine linsenförmige Kammer (2) begrenzen, in der die Luft oder das Druckgas eintreten können, bevor sie/es in die mit ihren jeweiligen Rotoren (23, 24) verbundenen Turbinen (12, 13) wechselt.

2. Drehende Tragfläche nach Anspruch 1, **dadurch gekennzeichnet, dass** sie einen starren zentralen Mast (7) umfasst, der imstande ist, mit dem Rumpf des Geräts (3) verbunden zu sein, der dazu bestimmt ist, die Auftriebskräfte der an den Rotoren (23, 24) über jeweilige Lagergehäuse (10, 11) befestigten Rotorblätter (14, 15) aufzunehmen und an den Rumpf (3) zu übertragen.

3. Drehende Tragfläche nach Anspruch 1 oder 2, **dadurch gekennzeichnet, dass** die untere drehende Kuppel (8) in ihrer Mitte offen ist, um eine starre Leitung (6) zur Beförderung der Luft oder des Druckgases aufzunehmen, wobei die Dichtheit zwischen der Leitung (6) und der Kuppel (8) von einer Dichtung (18) gewährleistet wird.

4. Drehende Tragfläche nach einem der Ansprüche 1 bis 3, **dadurch gekennzeichnet, dass** sie Segel (19, 20) umfasst, die jeweils die Verbindung zwischen jeder Kuppel (8, 9), ihrer jeweiligen Turbine (12, 13) und ihrem jeweiligen Lagergehäuse (10, 11) gewährleistet, wobei die Segel (19), die die untere Kuppel (8) betreffen, konfiguriert sind, um den Wechsel der Luft oder des Druckgases zu den Turbinen nicht zu behindern.

5. Drehende Tragfläche nach einem der vorangehenden Ansprüche, **dadurch gekennzeichnet, dass** die Turbinen (12, 13) konfiguriert sind, um die Rotoren (23, 24) in entgegengesetzter Richtung anzutreiben.

6. Drehende Tragfläche nach einem der vorangehenden Ansprüche, **dadurch gekennzeichnet, dass** jedes Rotorblatt (14, 15) in seinem Rotor von einem System von Lagergehäusen (16) geführt und gehalten wird und an einem Ende einen Steigungssteuerhebel (17) besitzt.

7. Drehende Tragfläche nach einem der vorangehenden Ansprüche, **dadurch gekennzeichnet, dass** der zentrale Mast (7) zu der starren Leitung (6) zur Beförderung der Luft oder des Druckgases koaxial ist.

8. Luftfahrzeug, das mit einer drehenden Tragfläche nach einem der vorangehenden Ansprüche ausgestattet ist.

9. Luftfahrzeug nach Anspruch 8, **dadurch gekennzeichnet, dass** es einen mit dem Rumpf (3) verbundenen Generator (1) umfasst, der die Luft oder das Druckgas an die linsenförmige Kammer (2) liefert.

10. Luftfahrzeug nach Anspruch 9, **dadurch gekennzeichnet, dass** es ein Ventilsystem umfasst, um die Versorgung der linsenförmigen Kammer (2) zu unterbrechen und den Auswurf der Luft oder des Druckgases nach hinten über eine Düse (5) zu ermöglichen, wenn der Antrieb des Luftfahrzeugs im Modus Tragschrauber ist.

11. Luftfahrzeug nach einem der Ansprüche 8 bis 10, **dadurch gekennzeichnet, dass** das Luftfahrzeug ein Hubschrauber oder ein Tragschrauber ist.
